# EUROPÄISCHE PATENTANMELDUNG

(11) **EP 2 330 703 A2**
(43) Veröffentlichungstag der Anmeldung: **08.06.2011**
(21) Anmeldenummer: 10189971.4
(22) Anmeldetag: 04.11.2010
(51) Int. Cl.: H02B 1/30

(54) **Anordnung zum Verstellen und Fixieren eines Tragholmes und Elektroinstallationsverteiler**

(30) Priorität: 04.12.2009 DE 102009057065
(71) Anmelder: Siemens Aktiengesellschaft, 80333 München (DE)
(72) Erfinder: Müller, Gerhard, 93492, Treffelstein (DE)

(57) **Zusammenfassung**

Die erfindungsgemäße Anordnung zum Verstellen und Fixieren eines Tragholmes (2) ist für einen Elektroinstallationsverteiler vorgesehen und weist einen Schlitten (1) auf, welcher fest mit dem Tragholm (2) verbunden und relativ zu einem Gehäuse des Elektroinstallationsverteilers bewegbar ist. Dabei weist der Schlitten (1) einen Arretierungshebel (4) auf, welcher beweglich an dem Schlitten (1) angeordnet und derart zum Zusammenwirken mit dem Gehäuse ausgebildet ist, dass der Tragholm (2) in einer vordefinierten Position fixierbar ist. Auf diese Weise wird eine einfache und schnelle Montage des Tragholmes (2) ermöglicht.

## Beschreibung

Die Erfindung betrifft eine Anordnung zum Verstellen und Fixieren eines Tragholmes für einen Elektroinstallationsverteiler, sowie einen Elektroinstallationsverteiler mit einem derartigen Tragholm.

Ein Elektroinstallationsverteiler - auch als Verteilerkasten, Sicherungskasten oder schlicht Verteiler bezeichnet - ist ein verschließbarer Kasten, in dem Sicherungs- und Schaltelemente zur Verteilung des elektrischen Stromes untergebracht sind. Er dienen somit der Aufnahme elektrischer und/oder elektronischer Komponenten einer Anlage, beispielsweise einer einzelnen Maschine, einer Fertigungsanlage oder eines Gebäudes und können beispielsweise als Kleinverteiler, Zählerschränke, Installationsverteiler, als Wand- oder Standverteiler oder als Isolierstoffverteiler ausgebildet sein. Elektroinstallationsverteiler werden - je nach Anwendung - aus lackiertem Stahlblech, Kunststoff oder Aluminiumblech in verschiedenen Bauformen gefertigt.

In einen derartigen Elektroinstallationsverteiler können verschiedene elektrische Bauelemente bzw. Elektroinstallationsgeräte, beispielsweise Sicherungen, Leitungsschutzschalter, Relais, Schütze oder Fehlerstromschutzschalter, eingebaut werden, so dass sie durch den Verteiler vor äußeren Einflüssen wie beispielsweise Staub oder Feuchtigkeit sowie vor äußerer mechanischer Krafteinwirkung oder unbefugtem Zugriff geschützt sind.

Im Inneren des Elektroinstallationsverteilers sind im Allgemeinen Gestellkonstruktionen mit Halterungen zur Strukturierung des Innenaufbaus sowie Stromführungssysteme zum Anschluss der elektrischen und/oder elektronischen Komponenten vorgesehen. Die elektrischen Bauelemente bzw. Elektroinstallationsgeräte sind dabei in der Regel an Tragschienen bzw. Hutschienen befestigt.

Elektroinstallationsverteiler sind in einigen Ländern standardisiert. Dabei legt eine Norm eine Teilungseinheit fest. Je nach Größe der Verteiler kann eine Vielzahl von Installationsreihen, die durch Befestigungsschienen, Tragholme oder Hutschienen gebildet werden können, vorgesehen sein. Gestellkonstruktionen bzw. Verteiler müssen flexibel ausgebildet sein, um den jeweiligen Kundenwünschen gerecht zu werden. Das Gerüst eines Verteilers weist in der Regel zwei Seitenrahmen und vier Querholme, die miteinander verschweißt sind, auf. Zwischen dem Seitenrahmen und den Querholmen können Befestigungsschienen und Tragholme verschiedenster Länge, die miteinander verbunden sind, angeordnet werden, um den Verteiler für die Aufnahme der verschiedensten elektrischen Installationsgeräte individuell zu gestalten. Mit Befestigungsschienen und Tragholmen können die Verteiler in verschiedene Ebenen unterteilt werden.

Aus dem Deutschen Gebrauchsmuster DE 299 03 244 U1 ist ein Verteilergestell bekannt, bei dem eine Bodengruppe und eine Dachgruppe mit Tragholmen miteinander verbunden sind. Dabei weisen die Tragholme an den Stirnseiten feststehende Tragelemente, insbesondere in Form von Steckbolzen, auf. Ein Steckbolzen ist starr, während der Steckbolzen der anderen Stirnseite federbelastet ausgebildet ist. Diese Art der Tragholme eignet sich gut um das Gerüst des Verteilers zusammenzufügen. Eine Veränderung der Position der Tragholme relativ zur Boden- bzw. Dachgruppe ist dabei nicht ohne Weiteres möglich, so dass eine Anpassung an die verschiedenen Verteilerbauarten erschwert wird.

Weiterhin ist aus der DE 202 06 813 U1 ist eine weitere Gestellkonstruktion bekannt, welche wenigstens eine erste und ein zweite Befestigungsschiene und wenigstens einen Tragholm aufweist. Der Tragholm ist zwischen den wenigstens zwei Befestigungsschienen an diesen angeordnet. Die erste Befestigungsschiene weist schlitzartige Öffnungen auf. Durch diese schlitzartigen Öffnungen können Vorsprünge des Tragholms zur Befestigung desselben eingeführt werden. Dabei weisen die Vorsprünge einen ersten gleich breiten Bereich auf. An den Befestigungsschienen ist eine Halteeinrichtung, beispielsweise in Form des länglichen Schlitzes und eines Befestigungsstiftes, zur kraftschlüssigen oder kraft- und formschlüssigen Befestigung des Tragholms angeordnet. Auch bei dieser Gestellkonstruktion ist eine Veränderung der Position der Tragholme relativ zu den Befestigungsschienen nicht ohne Weiteres möglich, was eine einfache Anpassung an die verschiedenen Verteilerbauarten erschwert.

Die Aufgabe der Erfindung besteht darin, eine Gestellkonstruktion mit einer Anordnung zum Verstellen und Fixieren eines Tragholmes sowie einen Verteiler für elektrische Installationsgeräte zu schaffen, welche eine einfache und schnelle Montage ermöglichen. Insbesondere soll ein Tragholm einfach und schnell montiert und verstellt werden können, so dass neben kurzen Montagezeiten auch eine hohe Modularität erreicht wird.

Diese Aufgabe wird durch die Anordnung zum Verstellen und Fixieren eines Tragholmes sowie den Elektroinstallationsverteiler gemäß den unabhängigen Ansprüchen gelöst. Vorteilhafte Ausgestaltungen sind Gegenstand der abhängigen Ansprüche.

Die erfindungsgemäße Anordnung zum Verstellen und Fixieren eines Tragholmes ist für einen Elektroinstallationsverteiler vorgesehen und weist einen Schlitten auf, welcher fest mit dem Tragholm verbunden und relativ zu einem Gehäuse des Elektroinstallationsverteilers bewegbar ist. Dabei weist der Schlitten einen Arretierungshebel auf, welcher beweglich an dem Schlitten angeordnet und derart zum Zusammenwirken mit dem Gehäuse ausgebildet ist, dass der Tragholm in einer vordefinierten Position fixierbar ist.

Zum Verstellen der Position des Tragholmes ist lediglich der Arretierungshebel zu lösen, d.h. von einer Verriegelungsposition, in der der Tragholm relativ zum Gehäuse fixiert ist, in eine Öffnungsposition, in der der Tragholm relativ zum Gehäuse bewegbar ist, zu verbringen. Anschließend kann der Tragholm relativ zum Gehäuse verschoben werden. Auf diese Weise werden eine schnelle und einfache Montage sowie eine schnelle und einfache Verstellbarkeit gewährleistet. Weiterhin ist aufgrund der hohen Modularität eine einfache Anpassung an verschiedene Verteiler-Baugrößen realisierbar.

In einer vorteilhaften Weiterbildung der Anordnung ist der Tragholm mit Hilfe des Arretierungshebels gegen das Gehäuse durch Klemmen arretierbar. Eine derartige, kraftschlüssige Fixierung des Tragholms durch Klemmen ist einfach zu realisieren und zeichnet sich durch äußerst geringe Herstellkosten aus.

In einer weiteren vorteilhaften Weiterbildung der Anordnung ist am Gehäuse zumindest eine Aussparung ausgebildet, in die der Arretierungshebel zur Fixierung des Tragholmes in der vordefinierten Position verrastbar ist. Eine derartige Anordnung ist ebenfalls einfach und schnell zu realisieren und gewährleistet durch das formschlüssige Fixieren des Tragholms zusätzlich auch bei äußerer Krafteinwirkung einen sicheren Halt des Tragholms am Gehäuse.

In einer weiteren vorteilhaften Weiterbildung der Anordnung weist das Gehäuse eine Gleitschiene auf, welche fest mit dem Gehäuse verbunden ist, wobei der Schlitten entlang der Gleitschiene bewegbar ist. Mit Hilfe der Gleitschiene wird der Tragholm beim Montieren oder Verstellen durch den Schlitten geführt, so dass er schnell und sicher fixiert werden kann. Die Montagezeit wird dadurch deutlich verkürzt.

In einer weiteren vorteilhaften Weiterbildung der Anordnung ist die Aussparung zum Verrasten des Arretierungshebels an der Gleitschiene ausgebildet. Die Ausführung der mindestens einen Aussparung an der Gleitschiene stellt eine einfache und kostengünstige Möglichkeit zur Anpassung an unterschiedliche, bauartbedingte Innenaufbauten des Elektroinstallationsverteilers dar.

In einer weiteren vorteilhaften Weiterbildung der Anordnung ist am Schlitten ein Federelement vorgesehen, welches derart vorgespannt ist, dass der Arretierungshebel in eine bevorzugte Position gedrängt wird. Durch das Federelement wird eine Federkraft auf den Arretierungshebel ausgeübt, welche den Arretierungshebel sicher in die jeweils bevorzugte Position drängt.

In einer weiteren vorteilhaften Weiterbildung der Anordnung ist der Tragholm in der bevorzugten Position relativ zum Gehäuse fixiert. Auf diese Weise wird ein unbeabsichtigtes Lösen des Tragholms durch das Federelement unterbunden; der Tragholm wird sicher in der fixierten Position gehalten.

In einer weiteren vorteilhaften Weiterbildung der Anordnung ist der Tragholm in der bevorzugten Position relativ zum Gehäuse bewegbar. Auf diese Weise kann der Tragholm einfach und mit geringem Aufwand verstellt werden.

In einer weiteren vorteilhaften Weiterbildung der Anordnung ist der Arretierungshebel mittels einer Stellschraube relativ zum Schlitten bewegbar. Die Stellschraube ist einfach zu realisieren und dient dazu, die Bewegungsmöglichkeit des Arretierungshebels zwischen der Verriegelungsposition und der Öffnungsposition zu realisieren bzw. zu unterstützen. Für den Fall, dass der Tragholm in der bevorzugten Position relativ zum Gehäuse fixiert ist, kann der Arretierungshebel mit Hilfe der Stellschraube gegen die Federkraft in der Öffnungsposition gehalten werden. Für den Fall, dass der Tragholm in der bevorzugten Position relativ zum Gehäuse bewegbar ist, stellt die Stellschraube ein zusätzliches Sicherungselement zur Fixierung des Tragholmes in der Verriegelungsposition dar.

In einer weiteren vorteilhaften Weiterbildung der Anordnung ist der Arretierungshebel relativ zum Schlitten drehbeweglich ausgeführt. In einer weiteren vorteilhaften Weiterbildung der Anordnung ist das Federelement als Drehfeder ausgeführt. Eine drehbewegliche Anordnung des Arretierungshebels relativ zum Schlitten stellt eine einfache und kostengünstige Realisierungsmöglichkeit dar. In diesem Fall ist es sinnvoll, das Federelement als Drehfeder auszubilden.

Der erfindungsgemäße Elektroinstallationsverteiler zur Aufnahme von Geräten der Elektroinstallationstechnik weist eine Anordnung zum Verstellen und Fixieren eines Tragholmes auf.

Hinsichtlich der Vorteile des erfindungsgemäßen Elektroinstallationsverteilers wird auf die Ausführungen zu der erfindungsgemäßen Anordnung zum Verstellen und Fixieren eines Tragholmes verwiesen.

Im Folgenden werden zwei Ausführungsbeispiele der Anordnung unter Bezug auf die beigefügten Figuren näher erläutert. In den Figuren sind:
- Figuren 1A bis 1D: schematische Darstellungen eines ersten Ausführungsbeispiels der Anordnung,
- Figuren 2A bis 2D: schematische Darstellungen eines zweiten Ausführungsbeispiels der Anordnung.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

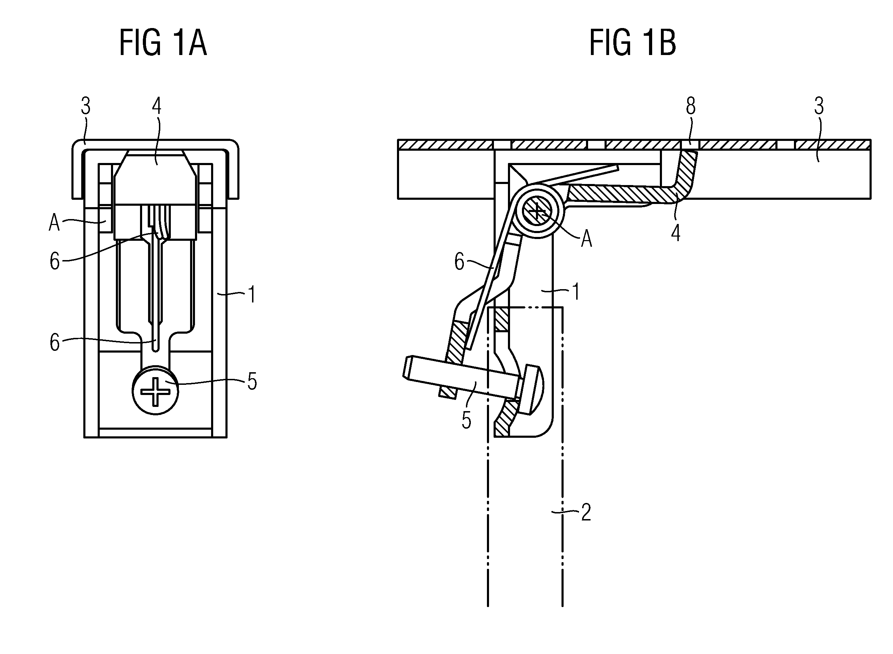

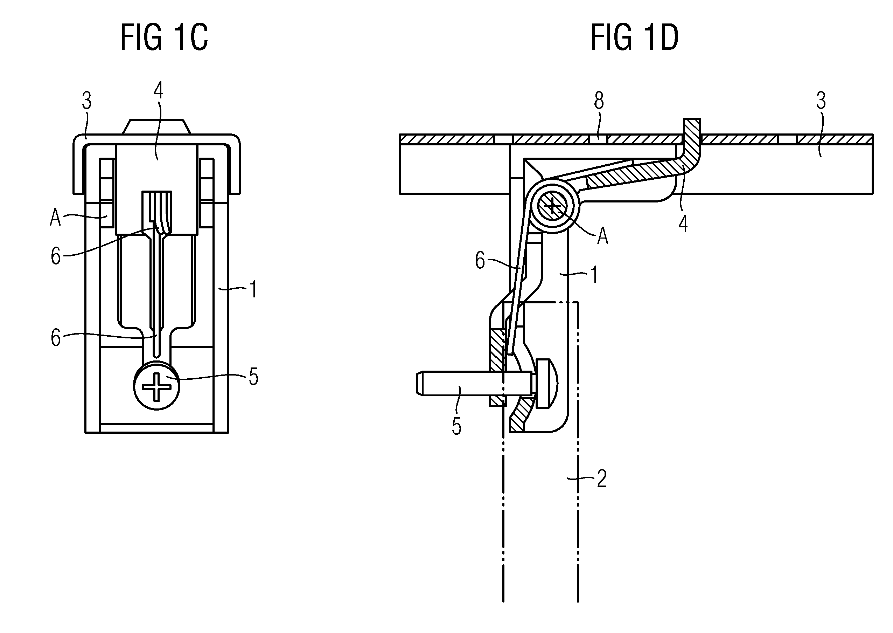

In den Figuren 1A bis 1D ist ein erstes Ausführungsbeispiel der Anordnung zum Verstellen und Fixieren eines Tragholmes 2 für einen Elektroinstallationsverteiler schematisch dargestellt. Die Figuren 1A und 1B zeigen die Anordnung in einer ersten Position, in der der Tragholm 2 verstellbar ist. An dem Tragholm 2 ist ein Schlitten 1 befestigt, welcher entlang einer Gleitschiene 3 geführt ist. Die Gleitschiene 3 kann dabei sowohl an einem Gehäuse eines Elektroinstallationsverteilers ausgebildet sein, als auch Bestandteil einer Gestellkonstruktion sein, welche in den Elektroinstallationsverteiler eingebaut wird. Die Gleitschiene 3 weist entlang eines Verschiebewegs des Schlittens 1 mehrere Aussparungen 8 auf, welche zum Verrasten mit einem Arretierungshebel 4 des Schlittens 1 vorgesehen sind. Der Arretierungshebel 4 ist dabei am Schlitten 1 um einen Drehpunkt A drehbar gelagert und wird über eine Drehfeder 6 in der in Fig. 1B dargestellten Öffnungsposition gehalten, in der ein Verstellen des Tragholms 2 möglich ist. Ferner ist in den Arretierungshebel 4 eine Stellschraube 5 eingedreht, deren Schraubenkopf sich am Schlitten 1 abstützt, so dass in der Öffnungsposition ein Anziehen der Stellschraube 5 in einer Drehbewegung des Arretierungshebels 4 im Gegenuhrzeigersinn resultiert. Hat der Tragholm 2 durch Verschieben entlang der Gleitschiene 3 seine Sollposition erreicht, so kann der Arretierungshebel 4 mit Hilfe der Stellschraube 5 in eine Verriegelungsposition verbracht werden, in welcher der Arretierungshebel 4 in eine der Aussparungen 8 eingreift. Der Tragholm 2 ist damit relativ zur Gleitschiene 3 fixiert. Diese zweite Position ist in den Figuren 1C und 1D dargestellt.

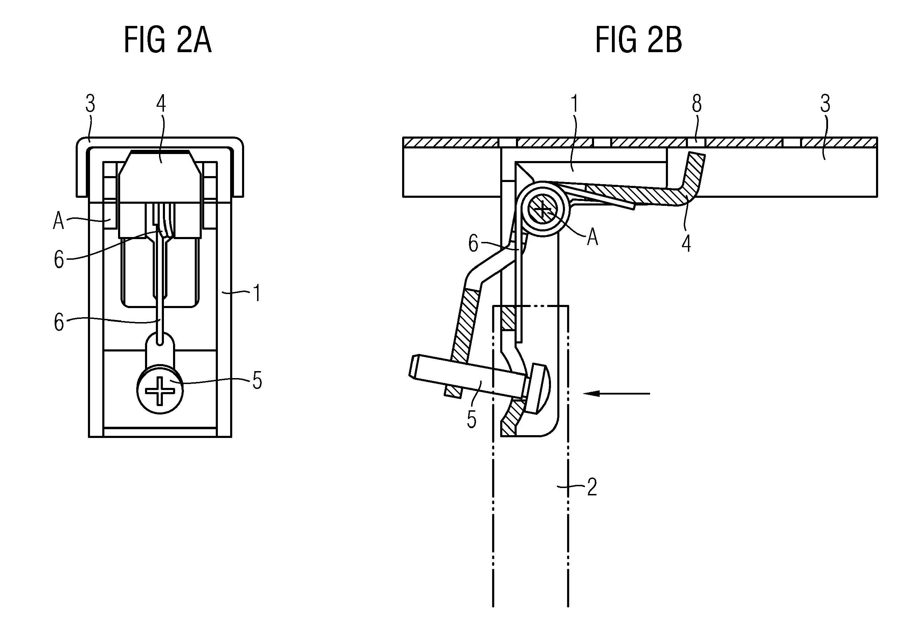

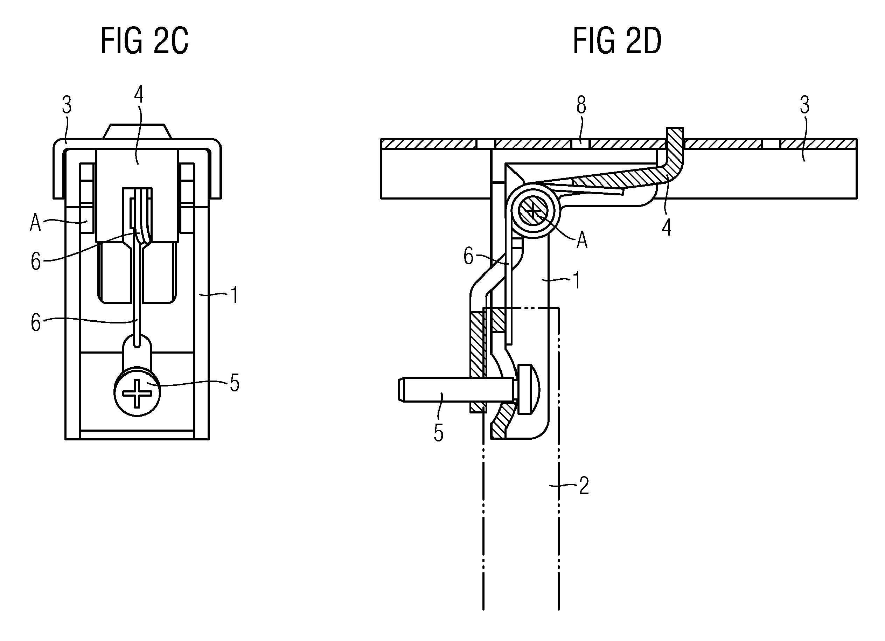

Die Figuren 2A bis 2D zeigen ein zweites Ausführungsbeispiel der Anordnung. In den Figuren 2A und 2B ist die Anordnung dabei wiederum in der ersten Position, in der der Tragholm 2 verstellbar ist, dargestellt. Die Figuren 2C und 2D zeigen die Anordnung wiederum in der zweiten Position, in der der Tragholm 2 an der Gleitschiene 3 fixiert ist. Im Unterschied zum ersten, in den Figuren 1A bis 1D dargestellten Ausführungsbeispiel ist im zweiten Ausführungsbeispiel die Drehfeder 6 derart ausgebildet, dass der Arretierungshebel 4 durch die von der Feder 6 aufgebrachten Federkraft in die Verriegelungsposition, in der der Arretierungshebel 4 in eine der an der Gleitschiene 3 ausgebildeten Aussparungen 8 eingreift, gedrängt wird. Die Stellschraube 5 ist dabei nur soweit in den Arretierungshebel 4 eingedreht, dass sie eine Bewegung des Arretierungshebels 4 um den Drehpunkt A in einem begrenzten Winkelbereich erlaubt. Um den Tragholm 2 aus der fixierten Position, in der der Arretierungshebel 4 im Eingriff mit einer der Aussparungen 8 steht, zu lösen, wird auf den Schraubenkopf eine Kraft in Pfeilrichtung aufgebracht, welche größer ist als die von der Feder 6 auf den Arretierungshebel 4 ausgeübte Federkraft. Dadurch wird der Arretierungshebel 4 im Uhrzeigersinn um den Drehpunkt A gedreht, bis er außer Eingriff mit der Aussparung 8 steht (siehe Fig. 2B). In dieser Öffnungsposition kann der Tragholm 2 relativ zur Gleitschiene 3 verschoben werden. Hat der Tragholm 2 seine Sollposition erreicht, so erfolgt durch Loslassen der Stellschraube 5 aufgrund der von der Feder 6 ausgeübten Federkraft eine Drehbewegung des Arretierungshebels 4 im Gegenuhrzeigersinn sowie ein Verrasten in einer der Aussparungen 8. Zum sicheren Fixieren der Anordnung in dieser Verriegelungsposition kann die Stellschraube 5 noch soweit angezogen werden, dass ein Verbringen in die Öffnungsposition durch ein ausschließliches Drücken auf den Schraubenkopf nicht mehr möglich ist.

### Bezugszeichenliste:

- 1: Schlitten
- 2: Tragholm
- 3: Gleitschiene
- 4: Arretierungshebel
- 5: Stellschraube
- 6: Feder
- 8: Aussparung

- A: Drehpunkt

## Patentansprüche

1. Anordnung zum Verstellen und Fixieren eines Tragholmes (2) für einen Elektroinstallationsverteiler,
- mit einem Schlitten (1), welcher fest mit dem Tragholm (2) verbunden ist und relativ zu einem Gehäuse des Elektroinstallationsverteilers bewegbar ist,
- wobei der Schlitten (1) einen Arretierungshebel (4) aufweist, welcher beweglich an dem Schlitten (1) angeordnet und derart zum Zusammenwirken mit dem Gehäuse ausgebildet ist, dass der Tragholm (2) in einer vordefinierten Position fixierbar ist.

2. Anordnung nach Anspruch 1,
wobei der Tragholm (2) mittels des Arretierungshebels (4) gegen das Gehäuse durch Klemmen arretierbar ist.

3. Anordnung nach Anspruch 1,
wobei am Gehäuse zumindest eine Aussparung (8) ausgebildet ist, in die der Arretierungshebel (4) zur Fixierung des Tragholmes (2) in der vordefinierten Position verrastbar ist.

4. Anordnung nach einem der Ansprüche 1 bis 3,
- wobei das Gehäuse eine Gleitschiene (3) aufweist, welche fest mit dem Gehäuse verbunden ist, und
- wobei der Schlitten (1) entlang der Gleitschiene (3) bewegbar ist.

5. Anordnung nach Anspruch 4,
wobei die Aussparung (8) zum Verrasten des Arretierungshebels (4) an der Gleitschiene (3) ausgebildet ist.

6. Anordnung nach einem der Ansprüche 1 bis 5,
wobei am Schlitten (1) ein Federelement (6) vorgesehen ist, welche derart vorgespannt ist, dass der Arretierungshebel (4) in eine bevorzugte Position gedrängt wird.

7. Anordnung nach Anspruch 6,
wobei der Tragholm (2) in der bevorzugten Position relativ zum Gehäuse fixiert ist.

8. Anordnung nach Anspruch 6,
wobei der Tragholm (2) in der bevorzugten Position relativ zum Gehäuse bewegbar ist.

9. Anordnung nach einem der vorhergehenden Ansprüche,
wobei der Arretierungshebel (4) mittels einer Stellschraube (5) relativ zum Schlitten (1) bewegbar ist.

10. Anordnung nach einem der vorhergehenden Ansprüche,
wobei der Arretierungshebel (4) relativ zum Schlitten (1) drehbeweglich ausgeführt ist.

11. Anordnung nach Anspruch 8,
wobei das Federelement (6) als Drehfeder ausgeführt ist.

12. Elektroinstallationsverteiler zur Aufnahme von Geräten der Elektroinstallationstechnik, wobei der Elektroinstallationsverteiler eine Anordnung zum Verstellen und Fixieren eines Tragholmes (2) aufweist.
